Europäisches Patentamt

European Patent Office

Office européen des brevets

(19)

(11) Veröffentlichungsnummer: **0 028 020**
**B1**

(12) **EUROPÄISCHE PATENTSCHRIFT**

(45) Veröffentlichungstag der Patentschrift:
**22.08.84**

(51) Int. Cl.³: **C 09 D 3/66, C 08 L 67/08**

(21) Anmeldenummer: **80106533.5**

(22) Anmeldetag: **24.10.80**

(54) **Verfahren zur Herstellung verbesserter lufttrocknender Alkydharze.**

(30) Priorität: **29.10.79 AT 6965/79**

(43) Veröffentlichungstag der Anmeldung:
**06.05.81 Patentblatt 81/18**

(45) Bekanntmachung des Hinweises auf die Patenterteilung:
**22.08.84 Patentblatt 84/34**

(84) Benannte Vertragsstaaten:
**DE FR GB IT NL**

(56) Entgegenhaltungen:
**EP - A - 0 002 488**
**DE - A - 2 416 658**

(73) Patentinhaber: **VIANOVA KUNSTHARZ AKTIENGESELLSCHAFT, Postfach 191 Leechgasse 21, A-8011 Graz (AT)**

(72) Erfinder: **Zückert, Bertram, Dr., Krottendorferstrasse 90/19, A-8052 Graz (AT)**

## Beschreibung

Die vorliegende Erfindung betrifft ein Verfahren zur Herstellung von verbesserten lufttrocknenden Emulsionen auf der Basis von öl- und phenolmodifizierten Alkydharzen, welche sich gegenüber den Produkten des Standes der Technik durch eine weiter verbesserte Lagerstabilität, sowohl in der Lieferform als auch in der Anwendungsform auszeichnen.

Gemäss EU-Patentanmeldung 0 002 488 werden lufttrocknende Alkydharzemulsionen in einem 3-Stufenprozess hergestellt, wobei zuerst ein Polyäthylenglykol (PÄG) mit einem durchschnittlichen Molekulargewicht zwischen 500 und 5000 mit einem niedrigmolekularen Alkylphenolresol veräthert und dann das so gewonnene Kondensat mit einem trocknenden Öl reagiert wird. Dieses Reaktionsprodukt dient als Ausgangsmaterial für die weitere Herstellung von Alkydharzen oder Öllackbindemitteln, welche zu wässrigen Emulsionen mit guten Eigenschaften verarbeitet werden können.

Die gemäss der genannten Anmeldung hergestellten Emulsionen zeigen gegenüber den auf herkömmliche Art hergestellten PÄG-modifizierten Harzen bereits wesentlich verbesserte Stabilitätseigenschaften und sind bezüglich Trocknungsgeschwindigkeit, Wasserbeständigkeit und Korrosionsbeständigkeit der Filme den üblichen in organischen Lösungsmitteln gelösten Alkydharzen durchaus ebenbürtig.

Nach den herkömmlichen Verfahren, bei denen PÄG nur durch Veresterung eingebaut wird, kann eine vergleichbare Emulsionsstabilität nur auf Kosten der Trocknungsgeschwindigkeit und Filmbeständigkeit durch Anheben des PÄG-Anteiles im Harz erkauft werden.

Trotz der guten Eigenschaften der in der obengenannten Anmeldung beschriebenen Produkte hat es sich gezeigt, dass für einen Hauptanwendungszweck solcher Alkydharzemulsionen, nämlich für Haushaltsfarben (Malerlacke), insbesondere für den sogenannten «Do-it-yourself» Sektor, die Stabilität der Produkte noch immer nicht ausreichend ist.

Bei Lagerzeiten von mehr als einem Jahr – ein Zeitraum, der beim Hersteller und im Farbengeschäft ohne weiteres erreicht werden kann – sowie bei Lagertemperaturen über 25 °C, wie sie auch in gemässigten Zonen im Sommer erreicht werden, wenn keine besondere Klimatisierung erfolgt, unterliegen diese Emulsionen unter ungünstigen Bedingungen einer einschneidenden Veränderung.

Obwohl die Emulsionen bei normalen Temperaturen ein Jahr ohne Absetzen überstehen, werden sie in dieser Zeit aber laufend dünnflüssiger. Je nach Messbedingungen kann der Viskositätsabfall in einem Jahr bis zu 90% vom Ausgangswert ausmachen. Dieser Viskositätsabbau wird natürlich durch erhöhte Temperaturen noch beschleunigt. Wenn auch die wichtigsten Lackeigenschaften, wie Trocknung und Filmqualität, von dieser Veränderung nicht betroffen sind, so ergeben sich doch für die Verarbeitung zahlreiche Probleme. Es besteht also ein dringender Bedarf nach einer weiteren Verbesserung der Lagerstabilität der Alkydharzemulsionen.

Die unbefriedigende Langzeitstabilität der gemäss der EU-Patentanmeldung 0 002 488 hergestellten Emulsionen ist vermutlich auf die geringe Verseifungsfestigkeit der endständigen, sauren Halbestergruppen zurückzuführen. Diese Gruppen werden durch einseitige Veresterung von Dicarbonsäuren (vorwiegend Phthalsäureanhydrid) gebildet. Die Carboxylgruppen sorgen nach Neutralisation mit Aminen für die notwendige, negative Aufladung der Emulsionströpfchen. Werden sie abgespalten, so wird die Emulsion zunächst grobteiliger und dünnflüssiger und zerfällt schliesslich.

Es ist aus der Literatur bekannt, dass die Verseifungsstabilität von sauren Halbestergruppen mit dem Abstand zwischen der Carboxylgruppe und der Estergruppe, d.h. mit der Grösse der dazwischenliegenden Alkylgruppe, wächst (siehe E.T. TURPIN, J.P.T., Vol 47, Nr. 602, 1975, Seiten 40–46).

Es ist daher versucht worden, stabilere Emulsionen dadurch zu erhalten, dass zur Einführung der Säuregruppen Additionsverbindungen von Acryl- bzw. Methacrylsäure an ungesättigte Fettsäuren verwendet wurden. Nach der DE-OS 2 416 658 werden durch Reaktion von Acrylsäure oder Methacrylsäure mit konjugiert ungesättigten Fettsäuren bei 250–300 °C Addukte hergestellt, die anschliessend nach den bekannten Verfahren durch Veresterung zu PÄG-modifizierten, wasseremulgierbaren Alkydharzen verarbeitet werden.

Die Nachteile dieses Verfahrens liegen darin, dass PÄG durch Veresterung eingebaut und dementsprechend leicht wieder abgespalten wird. Um eine ausreichende Emulsionsstabilität zu erreichen, muss daher viel PÄG (5–15%, in den Beispielen 8,5–9,5%) eingesetzt werden. Ausserdem entstehen unter den angegebenen Bedingungen Addukte mit maximal 15% Acrylsäure, während 17–47% der eingesetzten Acryl- bzw. Methacrylsäure ungebunden bleiben und durch Destillation entfernt werden müssen. Stellt man in Rechnung, dass für eine ausreichende Stabilisierung der Emulsion eine Säurezahl von ca. 20 erforderlich ist, müssen zur Adduktbildung der dafür notwendigen 2,58% Acrylsäure mindestens 14,6% der Fettsäuren aufgewendet werden. Da wasserverdünnbare lufttrocknende Alkydharze in der Regel einen Fettsäuregehalt von 30–40% aufweisen, ist diese Menge etwa die Hälfte der vorhandenen Fettsäure. Dieser Fettsäureanteil muss als für die Filmvernetzung verloren betrachtet werden, da bei der hohen Reaktionstemperatur bei der Herstellung des Vorprodukts die Doppelbindungen, die nicht durch Adduktbildung blockiert werden, durch Dimerisierung verlorengehen.

Daraus erklärt sich die relativ schwache Trocknung der nach DE-OS 2 416 658 hergestellten Produkte. Wollte man diese Methode mit dem Verfahren nach EU-Patentanmeldung 0 002 488 kom-

binieren, so würde man zwar Emulsionen mit guter Stabilität, aber mit noch schlechterer Trocknung und Filmvernetzung erhalten. In diesem Fall würden zusätzlich zu den durch Adduktbildung und Dimerisierung blockierten Doppelbindungen, diejenigen Doppelbindungen verlorengehen, die mit dem PÄG-modifizierten Alkylphenolharz reagieren.

Es wurde nun ein Verfahren gefunden, welches die beschriebenen Nachteile vermeidet und die Herstellung von stabilen Alkydharzemulsionen mit guten Trocknungs- und Filmeigenschaften erlaubt, wobei die anionische Stabilisierung durch Verwendung von Copolymerisaten als Träger der Carboxylgruppen erfolgt.

Die vorliegende Anmeldung betrifft daher ein Verfahren zur Herstellung von wasseremulgierbaren lufttrocknenden Lackbindemitteln auf der Basis von modifizierten Alkydharzen mit einem Fettsäuregehalt zwischen 15 und 50 Gew.-% und einem Polyäthylenglykolanteil von 3–8 Gew.-%, welche durch Kondensation eines Polyäthylenglykols mit einem durchschnittlichen Molekulargewicht zwischen 500 und 5000 und einem niedrigmolekularen Alkyl- und/oder Arylphenolresols und einem Ölfettsäureester mit einer Jodzahl von mindestens 125 und Reaktion dieses Kondensats mit Mono- und Dicarbonsäuren sowie den üblichen Alkoholkomponenten erhalten werden, welches dadurch gekennzeichnet ist, dass man

50–92 Gew.-% eines polyäthylenglykol-resol-modifizierten Alkydharzvorproduktes, welches eine Säurezahl unter 15, vorzugsweise unter 5 mg KOH/g, eine Grenzviskositätszahl von 4–8 ml/g (Chloroform, 20 °C) und eine Hydroxylzahl von 50–250 mg KOH/g aufweist, mit

8–50 Gew.-% eines Polymerisates, welches durch radikalische Polymerisation bei 80–140 °C, vorzugsweise 90–110 °C, aus 6–40 Gew.-% Methacrylsäure,

20–55 Gew.-% einer trocknenden Ölfettsäure mit einer Jodzahl von mindestens 125 und

20–70 Gew.-% einer oder mehrerer Vinyl- und/oder Vinylidenverbindungen, insbesonders Acrylverbindungen, welche ausser der Doppelbindung keine reaktionsfähigen Gruppen enthalten, erhalten wurde,

bei 170–200 °C bis zu einer Säurezahl von 10 bis 30, vorzugsweise 15 bis 25 mg KOH/g und einer Grenzviskositätszahl von 8 bis 12 ml/g (Chloroform, 20 °C) verestert.

Das so erhaltene modifizierte Alkydharz wird nach Zusatz von maximal 20 Gew.-% organischer Hilfslösungsmittel und Neutralisation der Carboxylgruppen mit Ammoniak oder organischen Aminen in Wasser emulgiert.

Das Alkydharzvorprodukt wird vorzugsweise gemäss EU-Patentanmeldung 0 002 488 hergestellt. Dabei wird in erster Stufe ein Polyäthylenglykol mit einem mittleren Molekulargewicht von 500 bis 5000, vorzugsweise 1000–3000, mit einem Phenolresol, welches vorzugsweise im Überschuss eingesetzt wird unter Verätherung bei 100 bis 160 °C reagiert. Gegebenenfalls kann die Entfernung des Reaktionswassers durch azeotrope Schleppmittel beschleunigt werden.

Als Phenolresole werden, wie dort beschrieben, im alkalischen Medium kondensierte Produkte aus Mono-$C_3$–$C_9$-alkylphenolen und/oder Arylphenolen und Formaldehyd verwendet, die im Durchschnitt mindestens 1,5, vorzugsweise 1,8, Methylolgruppen pro Molekül enthalten (Methylolfunktionalität mind. 1,5). Die eingesetzten Alkylphenole sind solche, welche als Substituenten Alkylreste mit 3 bis 9 Kohlenstoffatomen aufweisen, wie p-Isopropylphenol, Butylphenol, Amylphenol, Octyl- oder Nonylphenol. Bevorzugt kommt p-tert.-Butyl- und Cumylphenol, insbesondere in Mischung mit Alkylphenolen, zur Anwendung. Als Katalysator für die Reaktion zwischen dem PÄG und dem Phenolkondensat können gegebenenfalls bis zu 5 Gew.-%, bezogen auf alle in dieser Stufe vorliegenden Rohstoffe, einer organischen Säure mitverwendet werden. Als solche kommen neben ungesättigten Ölfettsäuren auch Acrylsäure, Fumarsäure und die verschiedenen isomeren Phthalsäuren in Frage.

Die 2. Reaktionsstufe, d.h. die Umsetzung des PÄG-Resol-Kondensates mit den ungesättigten Fettsäureestern erfolgt bei 180 bis 250 °C. Als Fettsäureester sind ungesättigte Öle mit Jodzahlen von mehr als 125, sowie praktisch hydroxylfreie Ester der in diesen Ölen vorkommenden ungesättigten Fettsäuren mit Polyolen geeignet. Zu diesen Rohstoffen zählen die trocknenden und halbtrocknenden Öle, wie Leinöl, Sojaöl, Safloröl, Sonnenblumenöl, dehydratisiertes Rizinusöl sowie die Ester der in diesen Ölen vorkommenden ungesättigten Fettsäuren mit z.B. Trimethyloläthan, Trimethylolpropan, Pentaerythrit, Neopentylglykol u.ä. Besonders geeignet sind Öle, deren Ölfettsäuren Doppelbindungen in zumindest teilweise konjugierter Konfiguration aufweisen, wie das beim Holzöl, Oiticicaöl, dehydratisiertem Rizinusöl, künstlich isomerisierten Ölen, sowie künstlich hergestellten Estern, welche solche Fettsäuren aufweisen, der Fall ist.

In einer bevorzugten Ausführungsform wird die erste Reaktionsstufe – nämlich die Verätherung des PÄG mit dem Resol – bereits in Gegenwart des ungesättigten Fettsäureesters aus der zweiten Reaktionsstufe durchgeführt.

In der 3. Reaktionsstufe werden diese Reaktionsprodukte nach üblichen Verfahren mit den dem Fachmann bekannten Rohstoffen zu den erfindungsgemäss eingesetzten Alkydharzvorprodukten umgesetzt. Sie werden durch Umesterung des PÄG-phenolmodifizierten Öles mit Polyalkoholen und weitere Veresterung mit Polycarbonsäuren hergestellt. Gegebenenfalls können zusätzliche Mengen trocknender Öle, der entsprechenden Ölfettsäuren sowie von cyclischen oder aromatischen Carbonsäuren mitverwendet werden.

Die gemäss vorliegender Erfindung für die Reaktion mit dem Copolymerisat geeigneten Alkydharzvorprodukte weisen einen Fettsäuregehalt zwischen 15 und 50%, eine Säurezahl unter 15, vorzugsweise unter 5 mg KOH/g, eine Hydroxylzahl zwischen 50 und 250 mg KOH/g und eine Grenzviskositätszahl von 4–8 ml/g, gemessen in Chloroform bei 20 °C auf. Selbstverständlich können auch Mischungen verschiedener Alkydharze, welche die genannte Spezifikation erfüllen, eingesetzt werden. Ebenso können auch Mischungen von PÄG-modifizierten Alkydharzen mit PÄG-freien Alkydharzen verwendet werden.

Zur Einführung der zur Stabilisierung der Emulsionen notwendigen Carboxylgruppen werden gemäss der vorliegenden Erfindung Polymerisate herangezogen, welche durch radikalische Polymerisation von 6–40 Gew.-% Methacrylsäure, 20–55 Gew.-% einer trocknenden Ölfettsäure mit einer Jodzahl von mindestens 125 und 20–70 Gew.-% einer oder mehrerer Vinyl- und/oder Vinylidenverbindungen, insbesonders Acrylverbindungen, welche ausser der Doppelbindung keine reaktionsfähigen Gruppen enthalten, eingesetzt.

Die Carboxylgruppen der Methacrylsäure besitzen nach der Polymerisation tertiäre Konfiguration und entsprechend geringe Reaktionsfähigkeit. Sie bleiben daher bei der Reaktion zwischen Alkyd- und Polymerisatharz im wesentlichen unverestert und dienen nach Neutralisation zur Stabilisierung der Emulsion. Die primären Carboxylgruppen der Fettsäuren reagieren dagegen mit den Hydroxylgruppen des Alkydharzvorproduktes und bewirken dadurch die Verknüpfung beider Komponenten.

Im Endprodukt liegen dann zwischen den stabilisierenden Carboxylatgruppen und den Esterbrücken die langen, hydrophoben Alkylketten der Fettsäuren, so dass eine hydrolytische Spaltung sehr erschwert wird.

Der Einbau der Vinylverbindungen und Acrylester dient zur Steuerung von Verträglichkeitsbereich und Emulgatorwirkung des Polymerisates. Damit wird einerseits ein leichterer Einbau des Polymerisates durch Regulierung der Verträglichkeit mit der Alkydkomponente, anderseits eine Emulgatorwirkung auch für den Fall, dass das Polymerisat nicht vollständig eingebaut bzw. nachträglich wieder abgespalten wird, erreicht.

Bei der Herstellung des Copolymerisats werden als trocknende Ölfettsäuren solche mit konjugierten Doppelbindungen – wie Rizinenfettsäuren oder isomerisierte Fettsäuren – oder solche mit isolierten Doppelbindungen – wie techn. Soja-, Safflor- oder Leinölfettsäure eingesetzt. Da isoliert ungesättigte Fettsäuren eine geringere Reaktionsfähigkeit besitzen, müssen sie in grösserem Überschuss eingesetzt werden. Sofern bei der Polymerisation die Fettsäure nicht vollständig reagiert, wird der Rest bei der Veresterung mit der Alkydharzkomponente eingebaut.

Als Vinyl- bzw. Vinylidenverbindungen können Styrol, Vinyltoluol, Vinylester der Essigsäure, der Propionsäure oder der Versaticsäure verwendet werden. Bevorzugt werden die handelsüblichen Alkylester der Acryl- und Methacrylsäure eingesetzt. Die Auswahl richtet sich im wesentlichen nach der Verträglichkeit mit dem Alkydharzvorprodukt, die insoweit gegeben sein muss, dass bei der Umsetzung mit diesem ein homogenes Endprodukt entsteht. Es ist dem Fachmann geläufig, dass durch die Auswahl der Monomeren auch die Trocknungsgeschwindigkeit und Härte der Lackfilme beeinflusst werden kann.

Die Polymerisation wird in Lösung bei 80–140, vorzugsweise 90–110 °C, durchgeführt. Als Initiatoren kommen alle Radikalbildner, welche in diesem Temperaturbereich zerfallen, in Frage. Besonders geeignet ist Di-Benzoylperoxid. Zur Begrenzung des Molekulargewichtes werden die üblichen Polymerisationsregler – wie tert. Dodecylmerkaptan – verwendet.

Als Endpunkt der Polymerisation wird das Konstantwerden des Trockenrückstandes, d.h. das weitgehende Verschwinden der flüchtigen Monomeren aus dem Reaktionsgemisch, angenommen.

Unter den angegebenen Bedingungen werden Nebenreaktionen, wie die Fettsäuredimerisierung, weitgehend unterdrückt. Daher bleiben die nicht einpolymerisierten Fettsäuren unverändert und behalten nach Einbau in das Alkydharz ihre Fähigkeit zur oxidativen Vernetzung.

Alkydharzvorprodukte und Polymerisate werden so kombiniert, dass nach vollständiger Veresterung der Fettsäuren bei 170–200 °C eine Säurezahl von 10–30, bevorzugt 15–25 und eine Grenzviskositätszahl von 8–12 ml/g, gemessen in Chloroform bei 20 °C resultiert. Der PÄG-Gehalt der erfindungsgemäss hergestellten modifizierten Alkydharze beträgt 3–8 Gew.-%.

Die Harze werden mit maximal 20% – bevorzugt 5–15% – organischen Hilfslösungsmitteln angelöst und in Wasser, welches zur 50–100%igen Neutralisation der Säuregruppen des Harzes die entsprechende Menge an Ammoniak oder organischen Aminen enthält, bei Temperaturen zwischen 40 und 80 °C emulgiert. Als Hilfslösungsmittel sind vor allem niedere Alkohole oder Ätheralkohole, wie Alkanole mit 2–5 C-Atomen oder Äthylenglykolmonoalkyläther, geeignet. Zur Neutralisation werden vorzugsweise tert. Amine, z.B. Triäthylamin oder Dimethyläthanolamin verwendet.

Die nach dem erfindungsgemässen Verfahren hergestellten modifizierten Alkydharze dienen als Basis für lufttrocknende wasserverdünnbare Lakke, welche nach den üblichen Verfahren aufgebracht werden können. Eine forcierte Trocknung bei Temperaturen bis etwa 80 °C ist ebenso möglich wie die Formulierung von Einbrennlacken. Im letzteren Fall werden geringe Anteile von Aminoharzen als zusätzliche Vernetzungsmittel dem Lackansatz zugegeben.

Die folgenden Beispiele erläutern das erfindungsgemässe Verfahren. Alle angegebenen Teile sind Gewichtsteile. Die angegebenen Grenzviskositätszahlen wurden in Chloroform bei 20 °C bestimmt.

Herstellung der Alkydharzvorprodukte

Die Zusammensetzung der Alkydharze ist aus der folgenden Tabelle 1 zu entnehmen.

Die Herstellung der Harze A 1–A 5 wird nach folgendem Verfahren durchgeführt:

Teil 1 auf 140 °C heizen und 60 Minuten bei dieser Temperatur halten. Dann die Temperatur in

Tabelle 1: Alkydharzvorprodukte

|  | A 1 | A 2 | A 3 | A 4 | A 5 | A 6 |
|---|---|---|---|---|---|---|
| **Teil 1:** | | | | | | |
| HÖ | 165 | 100 | – | – | 165 | 165 |
| LÖ | – | 70 | – | 100 | – | – |
| RÖ | – | – | – | 150 | – | – |
| ISFÖ | – | – | 180 | – | – | – |
| LÖFS | 10 | 10 | – | 20 | 10 | 10 |
| TÖFS | – | – | 10 | – | – | – |
| PÄG 1500 | 40 | – | 37 | 52 | 80 | – |
| PÄG 3000 | – | 30 | – | – | – | – |
| PÄG 600 | – | 10 | – | – | – | – |
| PR 1 | 45 | 40 | 25 | 35 | 50 | – |
| **Teil 2:** | | | | | | |
| PER | 185 | 185 | 180 | 172 | 185 | 185 |
| pt-PBS | 180 | 185 | – | – | 180 | 180 |
| BS | 40 | – | 130 | 120 | – | – |
| LÖFS | – | – | – | 90 | 40 | 40 |
| TÖFS | – | 100 | 100 | – | – | – |
| Zn 8% | 0,8 | 0,8 | 0,8 | 0,8 | 0,8 | 0,8 |
| **Teil 3:** | | | | | | |
| PSA | 130 | – | – | 145 | 130 | 130 |
| IPS | – | – | 133 | – | – | – |
| HA | – | 130 | – | – | – | – |
| THPSA | – | 88 | – | – | – | – |
| TPP/50 X | 0,6 | 0,6 | 0,6 | 0,6 | 0,6 | 0,6 |
| Summe | 801,4 | 954,4 | 801,4 | 889,4 | 846,4 | 711,4 |
| − H₂O | 57,4 | 64,4 | 68,4 | 57,4 | 55,4 | 37,4 |
| Harz 100%ig | 744 | 890 | 733 | 832 | 791 | 674 |

HÖ = Holzöl
LÖ = Leinöl
RÖ = dehydratisiertes Rizinusöl
ISFÖ = Isomerisiertes Saffloröl
LÖFS = Leinölfettsäure
TÖFS = Tallölfettsäure
PÄG 1500 = Polyäthylenglykol ($\overline{M} \sim 1500$)
PÄG 3000 = Polyäthylenglykol ($\overline{M} \sim 3000$)
PÄG 600 = Polyäthylenglykol ($\overline{M} \sim 600$)

PR 1: Phenolresol aus 1 Mol p. tert.-Butylphenol + 2 Mol Formaldehyd
PER: Pentaerythrit
pt-BSS: p. tert.-Butylbenzoesäure
BS: Benzoesäure
Zn 8%: Zinkoctoat (8% Zink)
PSA: Phthalsäureanhydrid
IPS: Isophthalsäure
HA: Hexachloroendomethylentetrahydrophthalsäure
THPSA: Tetrahydrophthalsäureanhydrid
TPP/50%: Triphenylphosphit (50%ig in Xylol)

75 Minuten auf 200 °C steigern und 90 Minuten bei diesem Wert halten. Dann Teil 2 zugeben, auf 245 °C erhitzen und 75 Minuten bei dieser Temperatur halten. Auf 200 °C kühlen, Teil 3 zusetzen und bei 190 °C unter Zusatz von Xylol als Schleppmittel verestern, bis eine Säurezahl unter 5 erreicht ist.

Bei dem PÄG-freien Alkydharzvorprodukt A 6 werden die Teile 1 und 2 zusammen sofort auf 245 °C erhitzt. Man verfährt weiter wie bei A 1– A 5.

Die Konstanten der Harze sind in Tabelle 2 zusammengestellt.

Herstellung der Polymerisate:
Die Zusammensetzung der Polymerisate P 1 bis P 4 ergibt sich aus der Tabelle 3.

Tabelle 2: Konstanten der Alkydharze

| Alkydharz | A 1 | A 2 | A 3 | A 4 | A 5 | A 6 |
|---|---|---|---|---|---|---|
| Fettsäuregehalt (%) | 22,4 | 31 | 38 | 42 | 21 | 25 |
| Hydroxylzahl (mg KOH/g) | 179 | 145 | 171 | 124 | 163 | 185 |
| Säurezahl (mg KOH/g) | 5,9 | 4,1 | 3,2 | 2,9 | 3,3 | 4,9 |
| Grenzviskositätszahl (Chloroform, 20°C) (ml/g) | 6,5 | 6,1 | 5,8 | 6,7 | 6,9 | 5,9 |

Tabelle 3: Polymerisate

| | P 1 | P 2 | P 3 | P 4 |
|---|---|---|---|---|
| Teil 1 | 60 LÖFS<br>45 X<br>45 IP<br>8 IBMA<br>6 Vt<br>6 MA<br>3 DBP<br>0,2 DM | 45 X<br>45 IP | 50 LÖFS<br>90 X | 20 RÖFS<br>35 X<br>35 IP |
| Teil 2 | 32 IBMA<br>24 Vt<br>24 MA<br>0,8 DM | 40 IBMA<br>30 Vt<br>30 MA<br>1 DM | 20 BA<br>65 Vt<br>15 MA<br>1 DM | 30 2 ÄHA<br>30 Vt<br>40 MA<br>1 DM |
| Teil 3 | 40 LÖFS<br>5 X<br>5 IP<br>11 DBP | 40 RÖFS<br>5 X<br>5 IP<br>10 DBP | 20 RÖFS<br>16 X<br>14 DBP | 10 RÖFS<br>10 X<br>5 IP<br>10 DBP |
| Summe | 315 | 251 | 291 | 226 |

LÖFS = Leinölfettsäure
RÖFS = Rizinenfettsäure
X = Xylol
IP = Isopropanol
IBMA = Isobutylmethacrylat
2 ÄHA = 2-Äthylhexylacrylat

Vt = Vinyltoluol
BA = n-Butylacrylat
MA = Methacrylsäure
DM = Dodecylmerkaptan
DBP = Dibenzoylperoxid 50%ig

Sie werden wie folgt hergestellt:

Teil 1 wird im Reaktionsgefäss vorgelegt und bei P 1, P 2 und P 4 bis zum Sieden (~90°C), bei P 3 bis auf 110°C erhitzt. Dann werden bei gleichbleibender Temperatur die Teile 2 und 3 gleichzeitig und gleichmässig in einem Zeitraum von 5 Stunden zugegeben. Die Temperatur wird dann so lange gehalten, bis die Bestimmung des Trockenrückstandes die vollständige Polymerisation der flüchtigen Monomeren anzeigt.

Tabelle 4: Konstanten der Polymerisate

| Polymerisat | P 1 | P 2 | P 3 | P 4 |
|---|---|---|---|---|
| Fettsäuregehalt (%) | 50 | 28,5 | 41 | 23 |
| Methacrylsäuregehalt (%) | 15 | 21,5 | 8,8 | 31 |
| Trockenrückstand (%) | 65,1 | 60 | 59,7 | 59,1 |
| Säurezahl (mg KOH/g) | 186 | 194 | 133 | 239 |
| Grenzviskositätszahl (ml/g) (Dimethylformamid, 20°C) | 5,2 | 8,6 | 6,7 | 8,1 |

Beispiele 1–5

Die Alkydharzvorprodukte werden mit den Polymerisaten in den in Tabelle 5 angegebenen Verhältnissen gemischt und auf 180°C erwärmt. Dabei werden die Lösungsmittel, zum Schluss unter Vakuum, vollständig abdestilliert. Dann wird bei 180°C verestert, bis die Säurezahl und Grenzviskositätszahl in dem in Tabelle 5 angegebenen Rahmen liegen.

Zur Beschleunigung der Veresterung können geringe Mengen Xylol als azeotropes Schleppmittel zugesetzt werden. Sie müssen am Ende der Reaktion jedoch wieder durch Vakuum-Destillation entfernt werden.

Die Harze werden sodann mit Äthylenglykolmonobutyläther auf 90% angelöst und unter Zusatz von Triäthylamin bei 50–60 °C in Wasser emulgiert. Die zugesetzten Mengen Triäthylamin und Wasser werden so gewählt, dass der pH-Wert der Emulsion zwischen 8,5 und 9,5 und die Viskosität, gemessen bei 20 °C mit dem Brookfield-Rotationsviskosimeter RVF, Spindel Nr. 7, 4 Umdrehungen pro Minute, zwischen 1500 und 3000 m Pa.s liegen.

Tabelle 5: Zusammensetzung[+] und Konstanten der erfindungsgemäss modifizierten Alkydharze

| Beispiel | 1 | 2 | 3 | 4 | 5 |
|---|---|---|---|---|---|
| Alkydharz A 1 | 80 | | | | |
| Alkydharz A 2 | | 90 | | | |
| Alkydharz A 3 | | | 85 | | |
| Alkydharz A 4 | | | | 65 | |
| Alkydharz A 5 | | | | | 55 |
| Alkydharz A 6 | | | | | 25 |
| Polymerisat P 1 | 20 | | | | 20 |
| Polymerisat P 2 | | | 15 | | |
| Polymerisat P 3 | | | | 35 | |
| Polymerisat P 4 | | 10 | | | |
| PÄG-Gehalt (%) | 4,3 | 4,05 | 4,3 | 4,05 | 5,6 |
| Säurezahl (mg KOH/g) | 17,3 | 20,5 | 19,8 | 18,1 | 18,4 |
| Grenzviskositätszahl (Chloroform, 20 °C, ml/g) | 9,5 | 8,9 | 9,8 | 10,2 | 9,7 |

[+] die angegebenen Zahlen beziehen sich auf 100%iges Harz.

Tabelle 6: Konstanten der Emulsionen

| Beispiel | 1 | 2 | 3 | 4 | 5 |
|---|---|---|---|---|---|
| Trockenrückstand (%) | 41,5 | 40 | 39,9 | 42 | 41,1 |
| Viskosität (m Pa.s) Brookfield RVF,[+] | 2450 | 2100 | 2000 | 2500 | 2400 |
| pH-Wert | 9,1 | 9,0 | 9,3 | 9,5 | 8,9 |

[+] gemessen bei 20 °C mit Spindel Nr. 7 bei 4 Umdrehungen/Minute

**Vergleichsbeispiele A und B**

Um den Fortschritt gegenüber dem Stand der Technik nachzuweisen, wurde zum Vergleich je eine Emulsion nach der EU-Patentschrift 0 002 488 bzw. der DE-OS 2 416 658 hergestellt:

**Vergleichsbeispiel A**

Es wurde eine Emulsion nach EU-Patentschrift 0 002 488 Beispiel 1, welche einen Trockenrückstand von 40,5% und eine Viskosität (Brookfield RVF, Sp. 7, 4 U/Min., 20 °C) von 2050 m Pa.s aufwies, hergestellt.

**Vergleichsbeispiel B**

Es wurde eine Emulsion gemäss DE-OS 2 416 658, Beispiel 2, hergestellt. Abweichend von der Originalschrift wurde das Harz vor dem Emulgieren 90%ig in Äthylenglykolmonobutyläther angelöst. Der Lösungsmittelzusatz dient der Erleichterung von Emulgierung und Lackherstellung und war erforderlich, um vergleichbare Bedingungen für alle Beispiele zu schaffen. Die Emulsion hatte einen Trockenrückstand von 51,5% und eine Viskosität (Brookfield RVF Sp. 7, 4 U/Min., 20 °C) von 1750 m Pa.s.

Prüfung der Lagerfähigkeit der Emulsionen

Zur Verkürzung der Prüfzeit wurde die Lagerfähigkeit unter forcierten Bedingungen bei 80 °C geprüft. Das entspricht ungefähr der 500fachen Beanspruchung einer Lagerung bei Normaltemperatur.

Die Viskosität der Emulsionen wurde nach 8, 16 und 24 Stunden Lagerung bei 80 °C geprüft.

Tabelle 7: Änderung der Viskosität bei Lagerung bei 80°C

| Brookfield RVF, Spindel 7, 4 U./min, 20°C, m Pa.s | | | | | | Vergleichsbeispiel | |
| Beispiel | 1 | 2 | 3 | 4 | 5 | A | B |
|---|---|---|---|---|---|---|---|
| Ausgangswert | 2450 | 2100 | 2000 | 2500 | 2400 | 2050 | 1750 |
| 8 Std. 80°C | 2650 | 2100 | 2150 | 2350 | 2200 | 950 | 1100 |
| 16 Std. 80°C | 2600 | 2250 | 2200 | 2400 | 2150 | 700 | 750 |
| 24 Std. 80°C | 2250 | 2100 | 2000 | 2200 | 2150 | 500 | +) |

+) beginnende Koagulation

Prüfung von pigmentierten Lacken

Aus den Emulsionen entsprechend Beispiel 1 bis 5, sowie den Vergleichsbeispielen A und B werden Lacke hergestellt, welche in einem Pigment-Bindemittelverhältnis von 1 : 1 mit Titandioxid pigmentiert und mit 3% (bezogen auf Festharz) eines wasserverträglichen Sikkativgemisches (enthaltend 1,2% Co, 7,2% Ba, 3,2% Zn), 1% eines Antihautmittels und 0,5% eines Verlaufmittels versetzt werden. Die Lacke werden mit deionisiertem Wasser auf Applikationsviskosität verdünnt. Die Ergebnisse sind in Tabelle 8 zusammengefasst.

Tabelle 8: Prüfung und Beurteilung der Lacke

| Beispiel | 1 | 2 | 3 | 4 | 5 | A | B |
|---|---|---|---|---|---|---|---|
| Lagerfähigkeit: | | | | | | | |
| (A) | LVA | i.O. | i.O. | LVA | i.O. | VA | VA |
| (B) | i.O. | i.O. | i.O. | i.O. | i.O. | LA | LA |
| (C) | – | – | – | – | – | REG | REG |
| Trocknung: | | | | | | | |
| Klebfrei nach Stden | 2 | 1,5 | 2 | 2 | 2 | 1,5 | 8 |
| Griffest nach Stden | 6 | 6 | 8 | 8 | 6 | 6 | 24 |
| Pendelhärte nach | | | | | | | |
| 1 Woche (DIN 53 154) | 58 | 65 | 49 | 41 | 55 | 62 | 38 |
| Wasserfestigkeit: | | | | | | | |
| (A) | LE | LE | LE | E | LE | LE | SE |
| (B) | REG | = | = | = | = | = | RB, GM |
| (C) | mo/g0 | mo/g0 | m1/g1 | m1/g2 | mo/g0 | mo/g0 | m1/g2 |

Prüfung der Lagerfähigkeit

In verschlossenem Gefäss bei 50°C während 4 Wochen; beurteilt wird die Veränderung der Viskosität (A), der Absetztendenz (B) und gegebenenfalls die Regenerierbarkeit (C).

Prüfung der Trocknungseigenschaften

24 Stunden nach Herstellung der Lacke werden Filme entsprechend einer Trockenfilmstärke von 30 µm auf Glasstreifen aufgezogen und geprüft.

Prüfung der Wasserfestigkeit

Die Prüfung erfolgt nach 24 Stunden Lufttrocknung durch 24stündige Lagerung der Filme in Wasser bei 20°C.

Erläuterungen der Abkürzungen

Lagerfähigkeit:
(A) Viskosität:
VA: Viskositätsabfall
LVA: leichter Viskositätsabfall

(B) Absetztendenz:
LA leichtes Absetzen
(C) Regenerierbarkeit:
REG: durch Zugabe von Triäthylamin normalisierbar, Bodensatz aufrührbar.

Wasserfestigkeit:
(A) Zustand unmittelbar nach dem Test:
LE: leichte Erweichung
E: Erweichung
SE: starke Erweichung
(B) nach 8 Stunden:
REG: regeneriert
RB: Runzelbildung
GM: Glanzminderung
(C) Blasengrad nach DIN 53 209

**Patentansprüche**

1. Verfahren zur Herstellung von wasseremulgierbaren lufttrocknenden Lackbindemitteln auf der Basis von modifizierten Alkydharzen mit einem Fettsäuregehalt zwischen 15 und 50 Gew.-% und einem Polyäthylenglykolanteil von 3 bis 8 Gew.-%, welche durch Kondensation eines Polyäthylenglykols mit einem durchschnittlichen Molekulargewicht zwischen 500 und 5000 mit einem niedrigmolekularen Alkyl- und/oder Arylphenolresols und einem Ölfettsäureester mit einer Jodzahl von mindestens 125 und Reaktion dieses Kondensats mit Mono- und Dicarbonsäuren sowie den üblichen Alkoholkomponenten erhalten werden, dadurch gekennzeichnet, dass man

50–92 Gew.-% eines polyäthylenglykol-resol-modifizierten Alkydharzvorproduktes, welches eine Säurezahl unter 15, vorzugsweise unter 5 mg KOH/g, eine Grenzviskositätszahl von 4–8 ml/g (Chloroform, 20 °C) und eine Hydroxylzahl von 50–250 mg KOH/g aufweist, mit

8–50 Gew.-% eines Polymerisates, welches durch radikalische Polymerisation bei 80–140 °C, vorzugsweise 90–110 °C, aus

6–40 Gew.-% Methacrylsäure,

20–55 Gew.-% einer trocknenden Ölfettsäure mit einer Jodzahl von mindestens 125 und

20–70 Gew.-% einer oder mehrerer Vinyl- und/oder Vinylidenverbindungen, insbesonders Acrylverbindungen, welche ausser der Doppelbindung keine reaktionsfähigen Gruppen enthalten, erhalten wurde,

bei 170–200 °C bis zu einer Säurezahl von 10 bis 30, vorzugsweise 15–25 mg KOH/g, und einer Grenzviskositätszahl von 8 bis 12 ml/g (Chloroform, 20 °C) verestert.

2. Verfahren nach Anspruch 1, dadurch gekennzeichnet, dass man als Alkydharzvorprodukte Mischungen verschiedener PÄG-modifizierter Alkydharzvorprodukte oder Mischungen von PÄG-modifizierten mit PÄG-freien Alkydharzvorprodukten einsetzt.

## Claims

1. Process for producing water emulsifiable air drying paint binders based on modified alkyd resins with a fatty acid content of between 15 and 50% by weight and a content of polyethylene glycol of from 3 to 8% by weight, obtained by condensation of a polyethylene glycol with an average molecular weight of between 500 and 5000 and a low molecular alkyl and/or arylphenol resol and an oil fatty acid ester with a minimum iodine number of 125, and reaction of this condensation product with mono- and dicarboxlic acids and the normal alcohol components, characterised in that

50–92% by weight of a polyethyleneglycol-resol-modified alkyd resin intermediate having an acid value of below 15, preferably below 5 mg KOH/g, an intrinsic viscosity of 4–8 ml/g (chloroform, 20 °C) and a hydroxyl value of 50–250 mg KOH/g, and

8–50% by weight of a polymer obtained through free radical polymerisation at from 80–140 °C, preferably 90–110 °C of

6–40% by weight methacrylic acid

20–55% by weight of a drying oil fatty acid with a minimum iodine number of 125 and

20–70% by weight of one or more vinyl- and/or vinylidene compounds, particularly acrylic compounds, carrying no other reactive groups besides the double bond,

are esterified at 170–200 °C to an acid value of 10 to 30, preferably 15–25 mg KOH/g and an intrinsic viscosity of 8–12 ml/g (chloroform, 20 °C).

2. Process according to claim 1, characterised in that as the alkyd resin intermediate mixtures are used of various PEG-modified alkyd resin intermediates or mixtures of PEG-modified alkyd resin intermediates with PEG-free alkyd resin intermediates.

## Revendications

1. Procédé de préparation de liants pour laques séchant à l'air et émulsionnables dans l'eau, à base de résines alkydes modifiées ayant une teneur en acides gras comprise entre 15 et 50% en poids et une teneur en polyéthylèneglycol de 3 à 8% en poids, obtenus par condensation d'un polyéthylèneglycol d'un poids moléculaire moyen compris entre 500 et 5000 avec un alkyl- et/ou arylphénolrésol à bas poids moléculaire et un ester d'acide gras huileux ayant un indice d'iode d'au moins 125 et par réaction de ce condensat avec des acides mono- et dicarboxyliques et avec les composants alcooliques usuels, caractérisé par le fait que l'on estérifie

50–92% en poids d'un préproduit de résine alkyde modifiée au polyéthylèneglycol et au résol ayant un indice d'acide inférieur à 15, de préférence inférieur à 5 mg de KOH/g, un indice de viscosité limite de 4–8 ml/g (chloroforme, 20 °C) et un indice d'hydroxyle de 50–250 mg de KOH/g, avec

8–50% en poids d'un polymérisat qui a été obtenu par polymérisation radicalaire à 80–140 °C, de préférence à 90–110 °C à partir de

6–40% en poids d'acide méthacrylique,

20–55% en poids d'un acide gras huileux séchant et ayant un indice d'iode d'au moins 125 et

20–70% en poids d'un ou de plusieurs composés vinyliques et/ou vinylidéniques, notamment de composés acryliques qui ne contiennent pas de groupes réactionnels en dehors de la double liaison,

à 170–200 °C jusqu'à un indice d'acide de 10 à 30, de préférence de 15 à 25 mg de KOH/g et un indice de viscosité limite de 8 à 12 ml/g (chloroforme, 20 °C).

2. Procédé selon la revendication 1, caractérisé par le fait qu'à titre de préproduit de résine alkyde, on met en œuvre des mélanges de différents préproduits de résines alkydes modifiées au PEG ou des mélanges de préproduits de résines alkydes modifiées au PEG avec des préproduits de résines alkydes exemptes de PEG.